Europäisches Patentamt

European Patent Office

Office européen des brevets

(19)

(11) **EP 1 427 626 B1**

(12) **EUROPÄISCHE PATENTSCHRIFT**

(45) Veröffentlichungstag und Bekanntmachung des Hinweises auf die Patenterteilung:
**05.01.2005 Patentblatt 2005/01**

(21) Anmeldenummer: 02769888.5

(22) Anmeldetag: **22.08.2002**

(51) Int Cl.$^7$: **B62D 6/00**, B60T 8/00

(86) Internationale Anmeldenummer:
**PCT/DE2002/003075**

(87) Internationale Veröffentlichungsnummer:
**WO 2003/024767 (27.03.2003 Gazette 2003/13)**

(54) **VERFAHREN UND VORRICHTUNG ZUR STEILWANDERKENNUNG**

METHOD AND DEVICE FOR THE IDENTIFICATION OF AN INCLINED FACE

PROCEDE ET DISPOSITIF DE RECONNAISSANCE D'UNE SURFACE INCLINEE

(84) Benannte Vertragsstaaten:
**DE FR GB**

(30) Priorität: **12.09.2001 DE 10144880**

(43) Veröffentlichungstag der Anmeldung:
**16.06.2004 Patentblatt 2004/25**

(73) Patentinhaber: **ROBERT BOSCH GMBH**
**70442 Stuttgart (DE)**

(72) Erfinder:
• **WETZEL, Gabriel**
**70825 Korntal (DE)**
• **LEIMBACH, Klaus-Dieter**
**73569 Eschach (DE)**

(56) Entgegenhaltungen:
**EP-A- 0 957 339       EP-A- 0 983 919**
**WO-A-97/28037          DE-A- 19 708 508**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Stand der Technik

Die Erfindung geht aus von einer Vorrichtung zum Bestimmen einer Fahrbahnneigungsgröße.

In der DE 197 08 508 A1 wird eine Vorrichtung bzw. ein Verfahren zur Regelung einer die Fahrzeugbewegung repräsentierenden Bewegungsgröße vorgeschlagen, welche erste Mittel zur Erfassung wenigstens der Querbeschleunigung des Fahrzeugs enthält. Die Vorrichtung enthält ferner zweite Mittel, wenigstens zur Ermittlung einer von der Fahrbahnquerneigung abhängigen Querbeschleunigungskomponente und/oder zur Korrektur wenigstens der Querbeschleunigung des Fahrzeugs wenigstens in Abhängigkeit von der Querbeschleunigungskomponente. Dabei wird in den zweiten Mitteln wenigstens in Abhängigkeit des an der Hinterachse des Fahrzeugs auftretenden Schräglaufwinkels ein Fahrzeugzustand festgestellt, bei dem die von der Fahrbahnquerneigung abhängige Querbeschleunigungskomponente ermittelt wird.

Die DE 199 14 727 A1 betrifft eine Vorrichtung zum Bestimmen einer Fahrbahnneigungsgröße, die die Neigung einer Fahrbahn beschreibt, auf der sich ein Fahrzeug befindet. Hierzu enthält die Vorrichtung einen im Bereich des Fahrzeugs angeordneten Flüssigkeitsbehälter, der eine Flüssigkeit enthält, mindestens einen Drucksensor der im Bereich des Bodens des Flüssigkeitsbehälters angeordnet ist und mit dem eine Druckgröße, die den Flüssigkeitsdruck in dem Flüssigkeitsbehälter beschreibt, ermittelt wird, und eine Auswerteeinheit, mit der der Drucksensor in Verbindung steht. In der Auswerteeinheit wird in Abhängigkeit der Druckgröße die Fahrbahnneigungsgröße ermittelt.

Aus dem Stand der Technik sind sogenannte "steer-by-wire"-Lenksysteme bekannt, bei denen das vom Fahrer des Fahrzeugs betätigbare Lenkrad nicht mechanisch unmittelbar mit den lenkbaren Rädern verbunden ist. Weiterhin ist aus der DE-OS 40 31 316 (entspricht der US 5,205,371) eine sogenannte Überlagerungslenkung bekannt, bei der zwar das vom Fahrer des Fahrzeugs betätigbare Lenkrad mechanisch unmittelbar mit den lenkbaren Rädern verbunden ist, jedoch fahrerunabhängig Lenkeingriffe vorgenommen werden können.

Die Merkmale des Oberbegriffs des Anspruchs 1 gehen aus der EP-A-957339 hervor.

Vorteile der Erfindung

Bei der vorliegenden Erfindung handelt es sich um ein Verfahren und eine Vorrichtung zur Erkennung einer quer zur Fahrtrichtung des Fahrzeugs geneigten Fahrbahn nach Anspruch 9 beziehungsweise Anspruch 1.

Eine Erkennung von Steilwänden beispielsweise für die Weiterverarbeitung in Fahrdynamikregelungssystemen (z.B Electronic Stability Program ESP) ist sinnvoll und vorteilhaft, da durch diese zusätzliche Information präzisere Eingriffe des Fahrdynamikregelungssystems möglich sind.

Betrachtet wird eine Vorrichtung und ein Verfahren zur Erkennung einer quer zur Fahrtrichtung geneigten Fahrbahn, einsetzbar in einem

- mit Messmitteln zur Erfassung wenigstens einer die Fahrdynamik beschreibenden Größe und
- mit Auswertemitteln zur Erkennung der Querneigung einer Fahrbahn

ausgestatteten Fahrzeug. Erfindungsgemäß muss das Fahrzeug über Lenksteuerungsmittel verfügen. Zur Erkennung der Querneigung der Fahrbahn wird

- an lenkbar ausgebildeten Rädern durch die Lenksteuerungsmittel wenigstens ein unabhängig vom Fahrer getätigter Lenkvorgang initiiert und
- in den Messmitteln während des Lenkvorgangs wenigstens eine die Fahrdynamik des Fahrzeugs beeinflussenden Größe erfasst und
- in den Auswertemitteln wenigstens durch Auswertung der die Fahrdynamik des Fahrzeugs beeinflussenden Größe während des wenigstens einen Lenkvorgangs eine Querneigung der Fahrbahn erkannt.

Ein wesentlicher Vorteil dieser Erfindung gegenüber dem in Oberbegriff genannten Stand der Technik besteht darin, dass sie nicht auf dem Prinzip eines Flüssigkeitsbehälters mit darin angebrachten Drucksensoren arbeitet. Durch diesen weitgehenden Verzicht auf aufwendige mechanische Komponenten ergeben sich die Vorteile geringeren Gewichts, größerer Wartungsfreiheit sowie einfacher Integrierbarkeit als Zusatzfunktionalität in bestehende Steuergeräte.

Von Vorteil ist, wenn in den Messmitteln während des wenigstens einen Lenkvorgangs die Gierrate und/oder die Querbeschleunigung erfasst wird erfasst wird. Damit entstehen häufig keine wesentlichen zusätzlichen Kosten, da ein Gierratensensor und/oder ein Querbeschleunigungssensor ohnehin in einem mit einem Fahrdynamikregelungssystem ausgestatteten Fahrzeug vorhanden sind.

Eine besonders vorteilhafte Ausführungsform ist dadurch gegeben, dass die Erkennung einer Querneigung einer Fahrbahn auf der Durchführung und Auswertung zweier entgegengesetzter, an lenkbar ausgebildeten Rädern unabhängig vom Fahrer durchgeführter Lenkvorgänge beruht.

Von Vorteil ist weiterhin, wenn in den Messmitteln während beider Lenkvorgänge die Gierrate und/oder die Querbeschleunigung des Fahrzeugs ermittelt werden.

Eine vorteilhafte Auswertemöglichkeit ist dadurch gekennzeichnet, dass die Detektion einer quer zur Fahrtrichtung geneigten Fahrbahn auf einem in den Auswertemitteln durchgeführten Vergleich beruht, wobei in den Vergleich die beiden während der beiden Lenkvorgänge ermittelten Gierraten und/oder Querbeschleunigungen eingehen.

Eine weitere vorteilhafte Ausführungsform der Erfindung ist dadurch gekennzeichnet

- dass an lenkbar ausgebildeten Rädern in den Lenksteuerungsmitteln ein unabhängig vom Fahrer getätigter Lenkvorgang initiiert wird,
- dass durch die Messmittel während des Lenkvorgangs eine die Fahrdynamik beschreibende Größe ermittelt wird,
- dass das Fahrzeug über Rechenmittel zur Ermittlung wenigstens einer die Fahrdynamik des Fahrzeugs beschreibenden Größe mit Hilfe eines Modells verfügt,
- dass in den Rechenmitteln eine die Fahrdynamik des Fahrzeugs beschreibende Größe berechnet wird und
- dass zur Detektion einer quergeneigten Fahrbahn in den Auswertemitteln die in den Messmitteln ermittelte Größe und die in den Rechenmitteln berechnete Größe herangezogen werden.

Von Vorteil ist bei dieser Ausführungsform,

- wenn von den Messmitteln während des einen Lenkvorgangs die Gierrate und/oder die Querbeschleunigung des Fahrzeugs ermittelt werden,
- wenn in den Rechenmitteln die Gierrate und/oder die Querbeschleunigung des Fahrzeugs berechnet werden und
- wenn die Detektion einer quer zur Fahrtrichtung geneigten Fahrbahn auf einem in den Auswertemitteln durchgeführten Vergleich beruht, wobei in den Vergleich

    - sowohl die ermittelte Gierrate als auch die berechnete Gierrate und/oder
    - sowohl die ermittelte Querbeschleunigung als auch die berechnete Querbeschleunigung eingehen

Hierbei ist es von Vorteil, wenn in den Rechenmitteln die Gierrate durch ein Modell berechnet wird, in welches als Eingangsgrößen die Fahrzeuglängsgeschwindigkeit und der Lenkwinkel der Vorderräder eingehen und/oder dass die Querbeschleunigung durch ein Modell berechnet wird, in welches als Eingangsgröße die Fahrzeuglängsgeschwindigkeit eingeht. Da diese Größen in einem modernen Kraftfahrzeug ohnehin zur Verfügung stehen, bedeutet dies keinen wesentlichen Zusatzaufwand.

Weitere vorteilhafte Ausgestaltungen der Erfindung sind den Unteransprüchen zu entnehmen.

Zeichnung

Ein Ausführungsbeispiel der Erfindung ist in der folgenden Zeichnung dargestellt und erläutert. Die Zeichnung besteht aus den Figuren 1 bis 9.

Fig. 1 zeigt den Einfluss einer Steilwand auf das Querbeschleunigungssignal.

Fig. 2a zeigt in exemplarischer Weise die Seitenführungskraft als Funktion des Schräglaufwinkels.

Fig. 2b zeigt die anschauliche Bedeutung des Schräglaufwinkels.

Fig. 3 zeigt den Einfluss eines Fahrerlenkeingriffes auf den mit einem Einspur-Fahrzeugmodell berechneten Gierratensollwert.

Fig. 4a zeigt in schematischer Art und Weise den Einfluss von Fahrerlenkeingriffen bei horizontaler Fahrbahn

Fig. 4b zeigt in schematischer Art und Weise den Einfluss von Fahrerlenkeingriffen in einer Steilwand

Fig. 5 zeigt in Form eines Flussablaufdiagrammes die Erkennung einer Steilwand über zwei Lenkeingriffe in verschiedene Richtungen. Dabei werden Gierraten ausgewertet.

Fig. 6 zeigt in Form eines Flussablaufdiagrammes die Erkennung einer Steilwand über nur einen Lenkeingriff. Dabei werden Gierraten ausgewertet.

Fig. 7 zeigt in Form eines Blockschaltbildes die prinzipielle Ausprägung der Erfindung

Fig. 8 zeigt in Form eines Flussablaufdiagrammes die Erkennung einer Steilwand über zwei Lenkeingriffe in verschiedene Richtungen. Dabei werden Querbeschleunigungen ausgewertet.

Fig. 9 zeigt in Form eines Flussablaufdiagrammes die Erkennung einer Steilwand über nur einen Lenkeingriff. Dabei werden Querbeschleunigungen ausgewertet.

Ausführungsbeispiele

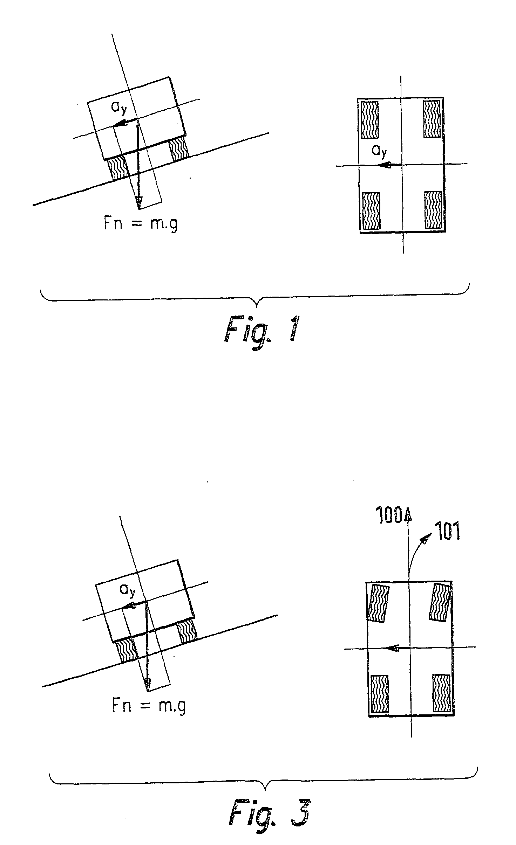

In Fig. 1 ist links ein Fahrzeug auf einer quer zur Fahrtrichtung schräggeneigten Fahrbahn dargestellt. Die Gewichtskraft des Fahrzeugs kann in zwei Komponenten zerlegt werden:

1. eine Normalkomponente senkrecht zur Fahrbahnebene und
2. eine Tangentialkomponente parallel zur Fahrbahnebene. Diese Tangentialkomponente entspricht einer Querbeschleunigung ay.

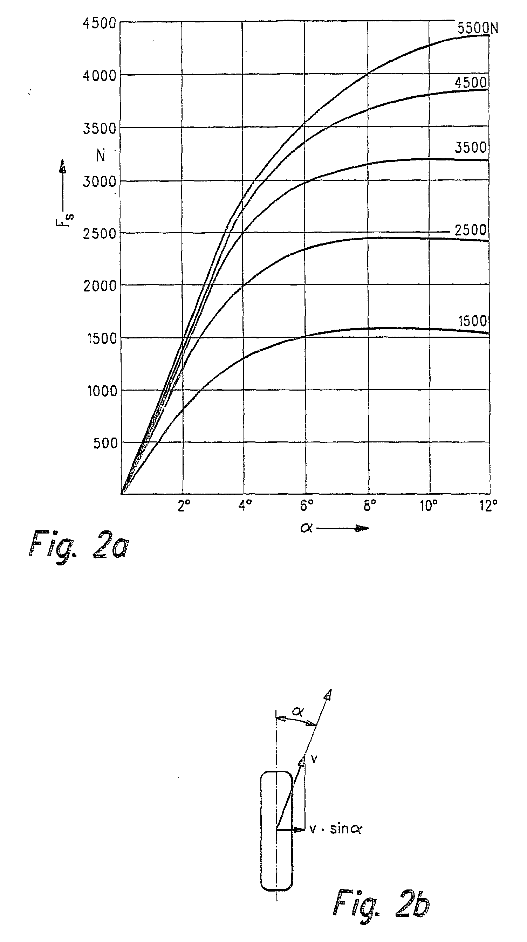

Um die Tangentialkomponente der Gewichtskraft zu kompensieren, werden von den Reifen Seitenführungskräfte aufgebracht. Bevor die Seitenführungskräfte in den Figuren 2a und 2b näher erläutert werden, sei abschließend noch auf folgendes hingewiesen: Bei einer gekrümmten Steilwand, also einer Steilkurve, überlagert sich zu der von der Gravitationskraft herrührenden tangentialen Kraftkomponenente noch eine Zentrifugalkraft, welche ebenfalls eine Tangentialkomponente aufweist. In diesem Fall ist die Summe beider Tangentialkomponenten zu betrachten.

Fig. 1 zeigt rechts eine Draufsicht auf des Fahrzeug.

In Fig. 1 wird zugleich auch die Notwendigkeit einer Steilwanderkennung aus einer ganz einfachen Überlegung deutlich. Dazu stelle man sich die Steilwand als nicht gekrümmt vor, d.h. es liegt keine Steilkurve vor. Im Falle einer unerkannten Steilwand kann dann die durch die Fahrbahnneigung hervorgerufene Tangentialkraft fälscherlicherweise als eine Querbeschleunigung gedeutet werden. Da die Querbeschleunigung beispielsweise in viele Fahrdynamikregelungssysteme eingeht, ist dies nicht wünschenswert.

In Figur 2a ist in einem Diagramm der Verlauf der Seitenführungskraft (Ordinate) als Funktion des Schräglaufwinkels (Abszisse) aufgetragen. Die verschiedenen Kurven im Diagramm beziehen sich dabei auf verschiedene Reifenaufstandskräfte. Die wesentliche Information, welche hier dem Diagramm 2 entnommen werden sollte, ist die folgende:

Für eine von Null verschiedene Seitenführungskraft muss ein von Null verschiedener Schräglaufwinkel vorliegen.

Der Begriff der Schräglaufwinkels wird anhand Fig. 2b erklärt. Dort ist in Draufsicht ein Fahrzeugrad abgebildet. Die nach oben weisende strichpunktierte Linie stellt die Felgenebene dar. Der lange, durchgehend gezeichnete Pfeil stellt die Bewegungsrichtung des Reifens dar (Vektor v).

Der Winkel zwischen der Felgenebene und der Bewegungsrichtung des Reifens ist als Schräglaufwinkel $\alpha$ eingezeichnet.
Ein von Null verschiedener Schräglaufwinkel bedeutet, dass das Fahrzeugrad eine Geschwindigkeitskomponente senkrecht zur Felgenebene, eingezeichnet als $v*\sin\alpha$, besitzt. Das bedeutet, dass das Rad seitlich "abrutscht" oder "wegrutscht".

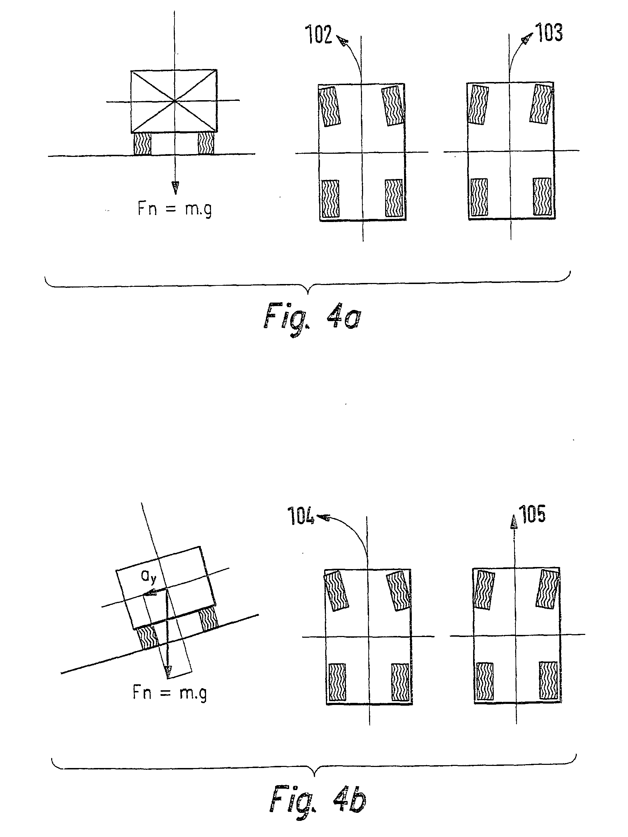

In Fig. 3 ist der Fall dargestellt, dass der Fahrer den Einfluss der Steilwand auf das Fahrverhalten durch Lenkeingriffe, d.h. Schrägstellen der Vorderräder, kompensieren möchte. Am einfachsten sind die Überlegungen wieder, wenn eine nichtgekrümmte Fahrbahn, also keine Steilkurve, betrachtet wird. Man beachte hierzu die schräggestellten Vorderräder in der rechts dargestellten Draufsicht auf das Fahrzeug. Dabei stelle man sich die Lenkeingriffe gerade so stark vor, dass das durch die Tangentialkraft bedingte "Abrutschen" der Räder durch den Lenkeingriff gerade kompensiert wird. Die vom Fahrer gewünschte Fahrtrichtung ist durch den Pfeil 100 gegeben. Da nun ein von Null verschiedener Lenkwinkel der Vorderräder sowie eine von Null verschiedene Fahrzeuglängsgeschwindigkeit auftreten, kann daraus fälschlicherweise durch ein im Steuergerät implementiertes mathematisches Modell auf eine von Null verschiedene Gierrate geschlossen werden.
Ein solches Modell zur Berechnung der Gierrate, das sogenannte Einspur-Modell, wird später vorgestellt.
Auch hier ist eine Weitergabe der fälschlicherweise als von Null verschieden berechneten Gierrate, welche das Fahrzeug in Richtung des Pfeils 101 drehen möchte, an andere Fahrzeugfunktionen nicht wünschenswert. Diese Überlegung soll nochmals in Kürze zusammengefasst werden:

- ohne einen Fahrerlenkeingriff rutscht Fahrzeug infolge des Schräglaufwinkels nach unten.
- Fahrer lenkt dagegen, Fahrzeug fährt dann geradeaus, d.h. die Gierrate ist Null.
- Durch ein mathematisches Modell wird jedoch eine von Null verschiedene Gierrate berechnet, was aber falsch ist.

Nach diesen für das Verständnis nützlichen Vorüberlegungen kann nun auf die Erfindung eingegangen werden.
Sobald eine Neigung einer Fahrbahn vermutet wird, wird in einer Ausführungsform zunächst leicht in eine Richtung gelenkt und dann in die andere Richtung. Dabei ist in erster Linie nicht an einen vom Fahrer getätigten Lenkeingriff gedacht, sondern an einen von einem Steuergerät selbstätig durchgeführten, fahrerunabhängigen Lenkeingriff bzw. Lenkvorgang. Dieser Lenkvorgang findet ohne eine Betätigung des Lenkrads statt.

Unter einem Lenkvorgang bzw. Lenkeingriff wird dabei der gesamte folgende Vorgang verstanden:

- Ausgangslenkwinkel $\beta=0$
- Ausgehend von $\beta=0$ wird der Lenkwinkel bis zu $\beta=\beta$max erhöht.
- Der Maximalwert $\beta=\beta$max wird möglicherweise für eine gewisse Zeitdauer konstant gehalten
- Ausgehend von $\beta=\beta$max wird der Lenkwinkel bis zu $\beta=0$ wieder reduziert

Dabei ist als Ausgangslenkwinkel nicht zwingend $\beta=0$ vorgeschrieben. Es kommt lediglich darauf an, daß der Lenkwinkel wieder zu seinem Ausgangswert zurückkehrt. Dann ist der Lenkeingriff bzw. Lenkvorgang abgeschlossen.

Bevor die Bilder 4a und 4b diskutiert werden, sei zuerst der prinzipielle Aufbau dieser beiden Bilder erläutert. Jedes dieser Bilder besteht von links nach rechts aus drei Teilen:

- Links: Rückansicht von Fahrzeug und Fahrbahn
- Mitte: Draufsicht auf das Fahrzeug, Bewegungsrichtung bei Lenkeinschlag nach links (aus der Stellung der Vorderräder ersichtlich)
- Rechts: Draufsicht auf das Fahrzeug, Bewegungsrichtung bei Lenkeinschlag nach rechts (wieder aus der Stellung der Vorderräder ersichtlich)

Die Folgen dieser Lenkeingriffe sind in Fig. 4a für die Fahrt auf einer Ebene dargestellt. Pfeil 102 zeigt die Fahrtrichtung bei einem Lenkvorgang nach links, Pfeil 103 zeigt die Fahrtrichtung bei einem Lenkvorgang nach rechts. Dabei treten im Idealfall betragsgleiche Gierraten, lediglich mit unterschiedlichen Vorzeichen auf. Außerdem treten auch betragsgleiche Querbeschleunigungen wiederum mit unterschiedlichen Vorzeichen auf.

Die Folgen dieser Lenkeingriffe für den Fall einer Fahrt auf einer quergeneigten Fahrbahn sind in Fig. 4b dargestellt. Dabei ist der Einfachheit halber der Sonderfall dargestellt, dass die Lenkbewegung nach rechts das "Abrutschen" der Rädern nach links infolge des Schräglaufwinkels gerade kompensiert. Pfeil 104 zeigt die Fahrtrichtung bei einem Lenkvorgang nach links, Pfeil 105 zeigt die Fahrtrichtung bei einem Lenkvorgang nach rechts. Es zeigt sich, dass die beiden zu den Fahrtrichtungen gehörenden Gierraten nicht mehr denselben Betrag haben. Bei der Geradeausfahrt ist die Gierrate Null.

Damit ist die Ermittlung einer quergeneigten Fahrbahn durch zwei Lenkeingriffe derselben Stärke, aber in unterschiedlichen Richtungen, möglich. Die Ermittlung der Gierrate erfolgt beispielsweise durch einen Gierratensensor.

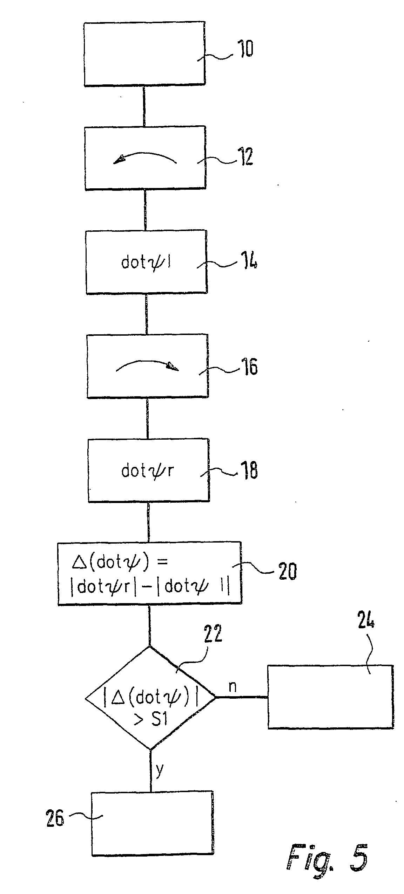

Der Ablauf der Ermittlung einer quer zur Fahrtrichtung geneigten Fahrbahn ist in Fig. 5 als Flussdiagramm dargestellt. Nach dem Start des Verfahrens in Block 10 wird in Block 12 eine leichte Lenkbewegung nach links initiiert und durchgeführt. Während dieser Lenkbewegung wird die auftretende Gierrate $dot\psi_l$ mit einem Gierratensensor in Block 14 gemessen. Anschließend wird in Block 16 eine Lenkbewegung derselben Stärke in die Gegenrichtung initiiert und durchgeführt. Während dieser Lenkbewegung wird die auftretende Gierratensensor $dot\psi_r$ mit einem Gierratensensor in Block 18 gemessen. In Block 20 wird die Differenz der Beträge gebildet, $\Delta(dot\psi) = |dot\psi_r| - |dot\psi_r|$. Anschließend wird in Block 22 die folgende Abfrage durchgeführt:

$$|\Delta(dot\psi)| > S1.$$

Dabei ist S1 ein wählbarer Schwellenwert. Ist $|\Delta(dot\psi)| > S1$, dann wird in Block 26 auf eine vorliegen-de Steilwand erkannt. Ist $|\Delta(dot\psi)| \leq S1$, dann wird in Block 24 auf keine vorliegende Steilwand erkannt. Dieser dargestellte Verfahrensablauf kann in regelmäßigen oder unregelmäßigen Zeitabständen durchgeführt werden. Es ist auch denkbar, dieses Verfahren nur dann einzusetzen, wenn das Vorliegen einer quergeneigten Fahrbahn durch andere Indizien vermutet wird.

Ein Indiz für eine gekrümmte Fahrbahn kann beispielsweise vorliegen, wenn die aufgrund der gemessenen Querbeschleunigung zu erwartende Drehrichtung des Fahrzeug und die aufgrund einer in einem Fahrzeugmodell berechneten Gierrate zu erwartende Drehrichtung des Fahrzeugs unterschiedliche Vorzeichen haben.

In einer weiteren Ausführungsform der Erfindung ist auch die Durchführung nur eines einziges Lenkeingriffes denkbar. Auch hier ist in erster Linie an eine von einem Lenksteuergerät initiierte Lenkbewegung gedacht, also keine vom Fahrer mittels des Lenkrads durchgeführte Lenkbewegung.

Diese Ausführungsform setzt die Berechnung der Gierrate des Fahrzeugs mittels eines mathematischen Modells voraus. Eine Querneigung der Fahrbahn wird dann aufgrund des Vergleiches der gemessenen Gierrate mit der berechneten Gierrate bestimmt.

Zum Verständnis ist ein kleiner Einschub über ein besonders einfaches Modell zur Berechnung der Gierrate sinnvoll. Das Einspur-Modell liefert dafür die folgende Beziehung

$$dot\psi^* = \frac{1}{(a+c)} \cdot \frac{v}{1+\frac{v^2}{v_{ch}^2}} \cdot \delta$$

welche aus der Fachliteratur bekannt ist (siehe z.B. "Bosch - Kraftfahrtechnisches Taschenbuch", 23. Auflage, Seite 707). Neben der Fahrzeuglängsgeschwindigkeit v und dem Lenkwinkel $\delta$ gehen in diese Beziehung eine charakteristische Fahrzeuggeschwindigkeit $v_{ch}$ sowie der Abstand a der Vorderräder vom Fahrzeugschwerpunkt und der Abstand c der Hinterräder vom Fahrzeugschwerpunkt ein. $dot\psi^*$ ist die mit diesem Modell berechnete Gierrate. Diese Formel lässt sich auch in der Form $dot\psi^* = K(v) * \delta$ darstellen, * bedeutet ein Multiplikationszeichen. Der geschwindigkeitsabhängige Faktor $K(v)$ kann der obigen Formel direkt entnommen werden. Dieser Faktor wird später noch eine Rolle spielen.

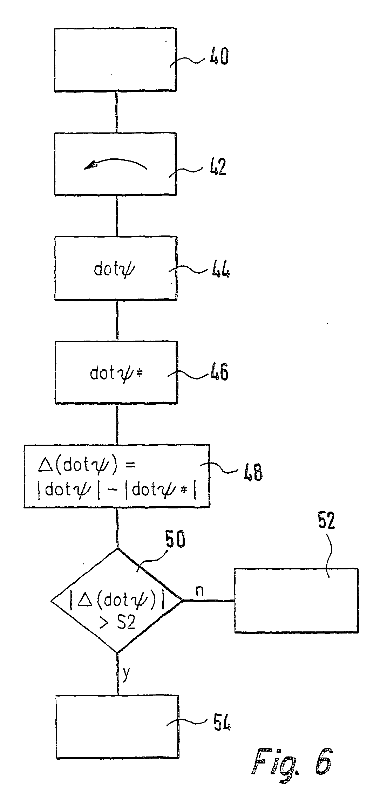

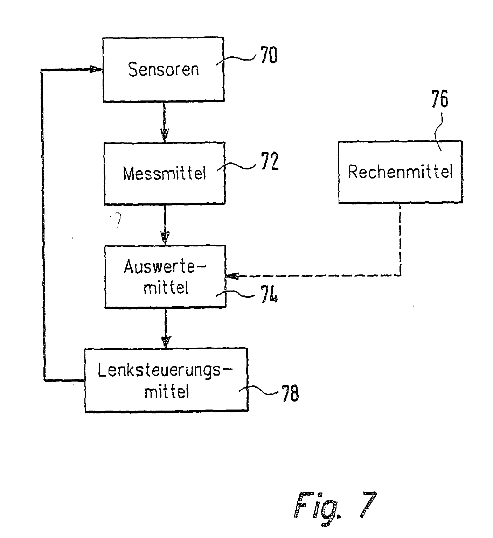

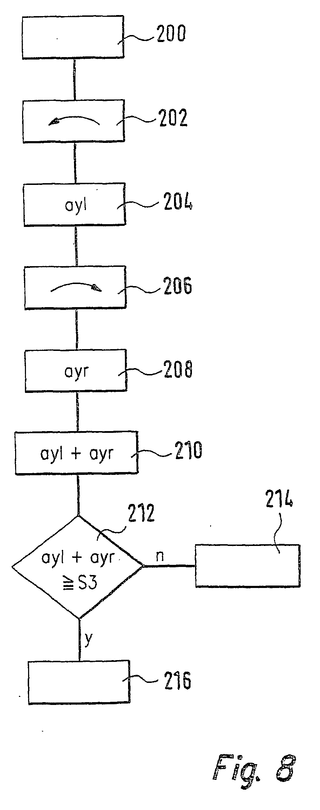

Der Verfahrensablauf bei dieser zweiten Ausführungsform ist im Flussdiagramm in Fig. 6 dargestellt.

Nach dem Start in Block 40 wird in Block 42 eine leichte Lenkbewegung initiiert und durchgeführt. In Block 44 wird die während dieser Lenkbewegung auftretende Gierrate $dot\psi$ gemessen. Dies kann z.B. über einen Gierratensensor erfolgen. In Block 46 wird zur selben Zeit die Gierrate $dot\psi^*$ mit einem mathematischen Modell berechnet. Dieses kann beispielsweise das oben dargestellte Einspurmodell sein. In Block 48 wird anschließend die Differenz der Beträge $\Delta(\text{dot}\psi) = |\text{dot}\psi| - |\text{dot}\psi^*|$ gebildet.

Anschließend wird in Block 50 die folgende Abfrage durchgeführt:

$$|\Delta(\text{dot}\psi)| > S2.$$

Dabei ist S2 ein wählbarer Schwellenwert. Ist $|\Delta(\text{dot}\psi)| > S2$, dann wird in Block 54 auf eine vorliegende Steilwand erkannt. Ist $|\Delta(\text{dot}\psi)| \leq S2$, dann wird in Block 52 auf keine vorliegende Steilwand erkannt. Dieser dargestellte Verfahrensablauf kann in regelmäßigen oder unregelmäßigen Zeitabständen durchgeführt werden. Es ist auch denkbar, dieses Verfahren nur dann einzusetzen, wenn das Vorliegen einer quergeneigten Fahrbahn durch andere Indizien vermutet wird.

In dieser Erfindungsbeschreibung wird eine Fahrbahn ab ungefähr einem Neigungswinkel von $10^0$ gegenüber der Horizontalen als Steilwand bezeichnet. Infolge von unvermeidlichen Störeffekten ist es sofort klar, dass nur sehr schwach geneigte Fahrbahnen mit solchen auf Lenkeingriffen beruhenden Verfahren nur sehr schwer erfasst werden können.

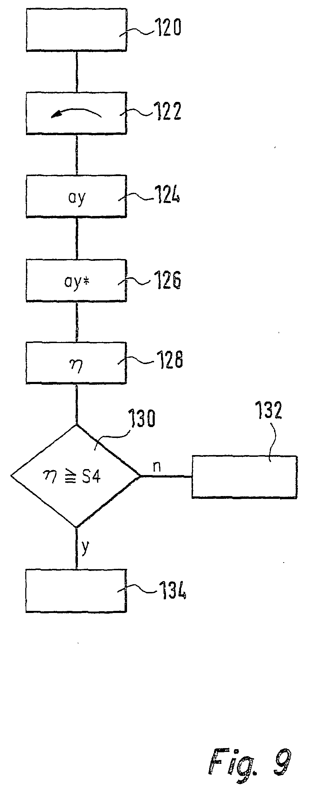

Eine abschließende prinzipielle Übersicht über die Erfindung ist in Fig. 7 gegeben. Block 70 enthält Sensoren, deren Ausgangssignale Messmitteln 72 zugeführt werden. In diesen Messmitteln werden die von den Sensoren 70 gelieferten Ausgangssignale in eine für die Weiterverarbeitung geeignete Form gebracht. Die Ausgangssignale der Messmittel 72 werden den Auswertemitteln 74 zugeführt. In den Auswertemitteln 74 wird entschieden, ob eine quergeneigte Fahrbahn vorliegt. Weiterhin ist denkbar, dass die Auswertemittel den Verfahrensablauf zur Detektion einer quergeneigten Fahrbahn steuern. Neben den Messmitteln 72 sind optional in einer besonderen Ausprägungsform zusätzliche Rechenmittel 76 vorhanden. Diese Rechenmittel 76 erlauben die Berechnung von die Fahrdynamik beinflussenden Größen durch mathematische Modelle. Die Ausgangssignale der Rechenmittel 76 werden, sofern Rechenmittel vorhanden sind, ebenfalls den Auswertemitteln 74 zugeführt. Die Ausgangssignale der Auswertemittel 74 können beispielsweise als Eingangssignale für Lenksteuerungsmittel 78 dienen, welche die Lenkvorgänge initiieren. Während eines Lenkvorgangs werden natürlich die für die Steilwanderkennung benötigten Größen von den Sensoren 70 erfasst.

Es sei noch angemerkt, dass sich diese Erfindung besonders gut für Fahrzeuge eignet, bei denen durch einen Steller die herkömmliche Lenkung ersetzt bzw. ergänzt wird. Dieser Steller kann die aktive Einstellung von Lenkeingriffen ohne Mithilfe des Fahrers ermöglichen. Hier seien beispielsweise das Schlagwort "Steer-by-wire" bzw. die eingangs erwähnte Überlagerungslenkung erwähnt.

Weiterhin sei noch angemerkt, dass in den Ausführungsbeispielen die von einem Gierratensensor gemessenen bzw. berechneten Gierraten als wesentliche Größen für die Bestimmung einer Steilwand verwendet wurden. Es sei betont, dass anstelle der Gierrate beispielsweise auch die Querbeschleunigung verwendet werden kann. Dies setzt dann einen Querbeschleunigungssensor anstelle eines Gierratensensors oder zusätzlich zum Gierratensensor voraus.

Für die Querbeschleunigung ay wird der folgende allgemeine Zusammenhang angenommen:

$$ay = f(m,g,\eta,v,\text{dot}\psi).$$

Dabei ist m die Fahrzeugmasse, g ist die Fallbeschleunigung (ungefähr 9.81 m/s^2), v ist die Fahrzeuggeschwindigkeit, $\text{dot}\psi$ ist die Gierrate und $\eta$ ist der Neigungswinkel der Steilwand gegenüber der Horizontalen.

Diese Gleichung kann näherungsweise folgendermassen linearisiert werden:

$$ay = (m * g * \eta) + (v * \text{dot}\psi).$$

Dabei ist * das Multiplikationszeichen. In dieser Gleichung rührt der erste Summand vom Steilwandeinfluss her (= Tangentialkomponente der Gewichtskraft), der zweite Summand berücksichtigt den Einfluß der Zentrifugalkraft.

Aus dem Einspurmodell ergibt sich

$$\text{dot}\psi = K(v) * \delta,$$

wobei $\delta$ der Lenkwinkel ist. Damit ist

$$ay = (m * g * \eta) + (v * K(v) * \delta).$$

Dadurch lassen sich die beiden beschriebenen Verfahren nun auch als auf der Querbeschleunigung basierend darstellen. Das in Fig. 8 dargestellte Verfahren entspricht dem in Fig. 5 dargestellten Verfahren. Der wichtigste Unterschied besteht darin, dass es die Querbeschleunigung anstelle der Gierrate verwendet. Das Verfahren läuft nach dem Start in Block 200 folgendermaßen ab:

- Lenkbewegung nach links mit Lenkwinkel $+\delta$ (Block 202), Messung der dabei auftretenden Querbeschleunigung ayl (Block 204)
- Lenkbewegung nach rechts mit Lenkwinkel $-\delta$ (Block 206), Messung der dabei auftretenden Querbeschleunigung ayr (Block 208)
- In Block 210 wird die Summe der Querbeschleunigungen gebildet: $ayl+ayr = 2*(m * g * \eta)$

- Das bedeutet: Wir messen jeweils die Querbeschleunigung bei einer Lenkbewegung nach links und einer anschließenden Lenkbewegung nach rechts. Wenn die Summe der beiden Terme einen vorgebbaren Grenzwert überschreitet, befindet sich das Fahrzeug auf einer Steilwand. Die Abfrage, ob dieser Grenzwert S3 überschritten wird, findet in Block 212 statt. Falls er nicht überschritten wird, dann wird in Block 214 auf keine vorliegende quer zur Fahrtrichtung geneigte Steilwand erkannt. Falls der Grenzwert überschritten wird, dann wird in Block 216 auf eine vorliegende quer zur Fahrtrichtung geneigte Steilwand erkannt.
- Es ist sogar möglich, damit den Neigungswinkel der Steilwand gegenüber der Horizontalen zu berechnen:

$$\eta = (ayl+ayr)/(2*m*g).$$

Das in Fig. 9 dargestellte Verfahren entspricht dem in Fig. 6 dargestellten Verfahren. Der wichtigste Unterschied besteht darin, dass es die Querbeschleunigung anstelle der Gierrate verwendet. Das in Fig. 9 dargestellte Verfahren läuft nach dem Start in Block 120 folgendermaßen ab:

- Lenkbewegung mit Lenkwinkel $\delta$ (Block 122).
- Messung der dabei auftretenden Querbeschleunigung ay (Block 124). Für die gemessene Querbeschleunigung ay gilt näherungsweise die Beziehung
  ay = (m * g * $\eta$) + (v * K(v)* $\delta$) mit einem Lenkwinkel $\delta$.
- Berechnung von ay* = v*K(v)*$\delta$ mit einem mathematischen Modell in Block 126.
- Berechnung von $\eta$ durch $\eta$ = (ay - ay*)/(m*g) in Block 128. Überschreitet der Wert von $\eta$ einen vorgebbaren Grenzwert S4, dann wird auf eine Steilwand erkannt.

Die Abfrage, ob dieser Grenzwert S4 überschritten wird, findet in Block 130 statt. Falls er nicht überschritten wird, dann wird in Block 132 auf keine vorliegende quer zur Fahrtrichtung geneigte Steilwand erkannt. Falls der Grenzwert überschritten wird, dann wird in Block 134 eine vorliegende quer zur Fahrtrichtung geneigte Steilwand erkannt.

Diese dargestellten Verfahrensabläufe können in regelmäßigen oder unregelmäßigen Zeitabständen durchgeführt werden. Es ist auch denkbar, diese Verfahren nur dann einzusetzen, wenn das Vorliegen einer quergeneigten Fahrbahn durch andere Indizien vermutet wird.

Weiterhin sei nochmals betont, dass die erfindungsgemässen Verfahren sich auch zur Detektion einer Steilkurve eignen. Dass in der Beschreibung häufig eine nichtgekrümmte Steilwand betrachtet wurde, hängt mit der größeren Anschaulichkeit zusammen.

**Patentansprüche**

1. Vorrichtung zur Erkennung einer quer zur Fahrtrichtung eine Fahrzeugs geneigten Fahrbahn,

   - mit Messmitteln (72) zur Erfassung wenigstens einer die Fahrdynamik beschreibenden Größe und
   - mit Auswertemitteln (74) zur Erkennung der Querneigung einer Fahrbahn

   **dadurch gekennzeichnet dass** zur Erkennung der Querneigung der Fahrbahn

   - an lenkbar ausgebildeten Rädern durch Lenksteuerungsmittel (78) wenigstens ein unabhängig vom Fahrer getätigter Lenkvorgang initiiert wird und
   - in den Messmitteln (72) während des Lenkvorgangs wenigstens eine die Fahrdynamik des Fahrzeugs beeinflussende Größe erfasst wird und
   - in den Auswertemitteln (74) wenigstens durch Auswertung der die Fahrdynamik des Fahrzeugs beeinflussenden Größe während des wenigstens einen Lenkvorgangs eine Querneigung der Fahrbahn erkannt wird.

2. Vorrichtung nach Anspruch 1, **dadurch gekennzeichnet, dass** in den Messmitteln (72) während des wenigstens einen Lenkvorgangs die Gierrate (dot$\psi$r, dot$\psi$l, dot$\psi$) und/oder die Querbeschleunigung (aq, aql, aqr) erfasst wird.

3. Vorrichtung nach Anspruch 1, **dadurch gekennzeichnet, dass** an lenkbar ausgebildeten Rädern durch die Lenksteuerungsmittel (78) zwei unabhängig vom Fahrer getätigte Lenkvorgänge in entgegengesetzter Richtung initiiert werden.

4. Vorrichtung nach Anspruch 3, **dadurch gekennzeichnet, dass** in den Messmitteln (72) während beider Lenkvorgänge die Gierrate (dot$\psi$r, dot$\psi$l) und/oder die Querbeschleunigung (aqr, aql) des Fahrzeugs ermittelt wird.

5. Vorrichtung nach Anspruch 4, **dadurch gekennzeichnet, dass** die Detektion einer quer zur Fahrtrichtung geneigten Fahrbahn auf einem in den Auswertemitteln (74) durchgeführten Vergleich beruht, wobei in den Vergleich die beiden während der beiden Lenkvorgänge ermittelten Gierraten (dot$\psi$r, dot$\psi$l) und/oder Querbeschleunigungen (aqr, aql) eingehen.

6. Vorrichtung nach Anspruch 1, **dadurch gekennzeichnet,**

- **dass** an lenkbar ausgebildeten Rädern in den Lenksteuerungsmitteln (78) ein unabhängig vom Fahrer getätigter Lenkvorgang initiiert wird,
- **dass** durch die Messmittel (72) während des Lenkvorgangs eine die Fahrdynamik beschreibende Größe ermittelt wird,
- **dass** das Fahrzeug über Rechenmittel (76) zur Ermittlung wenigstens einer die Fahrdynamik des Fahrzeugs beschreibenden Größe mit Hilfe eines Modells verfügt,
- **dass** in den Rechenmitteln (76) eine die Fahrdynamik des Fahrzeugs beschreibende Größe (dotψ*, aq*) berechnet wird und
- **dass** zur Detektion einer quergeneigten Fahrbahn in den Auswertemitteln (74) die in den Messmitteln (72) ermittelte Größe (dotψ, aq) und die in den Rechenmitteln (76) berechnete Größe (dotψ*, aq*) herangezogen werden.

7. Vorrichtung nach Anspruch 6, **dadurch gekennzeichnet,**

   - **dass** von den Messmitteln (72) während des einen Lenkvorgangs die Gierrate (dotψ) und/oder die Querbeschleunigung (ay) des Fahrzeugs ermittelt wird,
   - **dass** in den Rechenmitteln (76) die Gierrate (dotψ*) und/oder die Querbeschleunigung (ay*) des Fahrzeugs berechnet wird und
   - **dass** die Detektion einer quer zur Fahrtrichtung geneigten Fahrbahn auf einem in den Auswertemitteln (74) durchgeführten Vergleich beruht, wobei in den Vergleich

      - sowohl die ermittelte Gierrate (dotψ) als auch die berechnete Gierrate (dotψ*) und/oder
      - sowohl die ermittelte Querbeschleunigung (aq) als auch die berechnete Querbeschleunigung (aq*) eingehen

8. Vorrichtung nach Anspruch 7, **dadurch gekennzeichnet, dass** in den Rechenmitteln (76) die Gierrate (dotψ*) durch ein Modell berechnet wird, in welches als Eingangsgrößen die Fahrzeuglängsgeschwindigkeit (v) und der Lenkwinkel (δ) der Vorderräder eingehen und/oder dass die Querbeschleunigung durch ein Modell berechnet wird, in welches als Eingangsgröße die Fahrzeuglängsgeschwindigkeit (v) eingeht.

9. Verfahren zur Erkennung einer quer zur Fahrtrichtung geneigten Fahrbahn, einsetzbar in einem

   - mit Messmitteln (72) zur Erfassung wenigstens einer die Fahrdynamik beschreibenden Größe und

   - mit Auswertemitteln (74) zur Erkennung der Querneigung einer Fahrbahn

   ausgestatteten Fahrzeug, mit Folgenden Schritten:

   - Initiierung wenigstens eines nicht vom Fahrer getätigten Lenkvorganges durch Lenksteuerungsmittel (78) und
   - Erfassung wenigstens einer die Fahrdynamik des Fahrzeugs beeinflussenden Größe während des Lenkvorgangs durch die Messmittel (72) und
   - Erkennung einer quergeneigten Fahrbahn wenigstens durch Auswertung der die Fahrdynamik des Fahrzeugs beeinflussenden Größe während des wenigstens einen Lenkvorgangs in den Auswertemitteln (74).

10. Verfahren nach Anspruch 9, **dadurch gekennzeichnet, dass** in den Messmitteln während des wenigstens einen Lenkvorgangs die Gierrate (dotψr, dotψl, dotψ) und/oder die Querbeschleunigung (aq, aqr, agl) erfasst wird.

**Claims**

1. Device for detecting an underlying surface which is inclined transversely with respect to the direction of travel of a vehicle

   - having measuring means (72) for sensing at least one variable which describes the vehicle movement dynamics, and
   - having evaluation means (74) for detecting the transverse inclination of an underlying surface,

   **characterized in that**, in order to detect the transverse inclination of the underlying surface,

   - at least one steering process which is actuated independently of the driver is initiated by steering control means (78) at wheels which are of steerable design, and
   - at least one variable which influences the vehicle movement dynamics of the vehicle is sensed in the measuring means (72) during the steering process, and
   - a transverse inclination of the underlying surface is detected during the at least one steering process, in the evaluation means (74) at least by evaluating the variable which influences the vehicle movement dynamics of the vehicle.

2. Device according to Claim 1, **characterized in that** the yaw rate (dotψr, dotψl, dotψ) and/or the transverse acceleration (aq, aql, aqr) is sensed in the measuring means (72) during the at least one steering process.

3. Device according to Claim 1, **characterized in that** two steering processes which can be actuated independently of the driver are initiated in opposite directions by the steering control means (78) at wheels which are of steerable design.

4. Device according to Claim 3, **characterized in that** the yaw rate (dotψr, dotψl) and/or the transverse acceleration (aqr, aql) of the vehicle are determined in the measuring means (72) during both steering processes.

5. Device according to Claim 4, **characterized in that** the detection of an underlying surface which is inclined transversely with respect to the direction of travel is based on a comparison which is carried out in the evaluation means (74), the two yaw rates (dotψr, dotψl) and/or transverse accelerations (aqr, aql) which are determined during the two steering processes being included in the comparison.

6. Device according to Claim 1, **characterized**

   - **in that** a steering process which is actuated independently of the driver is initiated in the steering control means (78) at wheels which are of steerable design,
   - **in that** a variable which describes the vehicle movement dynamics is determined by the measuring means (72) during the steering process,
   - **in that** the vehicle has computing means (76) for determining, by means of a model, at least one variable which describes the vehicle movement dynamics of the vehicle,
   - **in that** a variable (dotψ*, aq*) which describes the vehicle movement dynamics of the vehicle is calculated in the computing means (76), and
   - **in that** the variable (dotψ, aq) which is determined in the measuring means (72) and the variable (dotψ*, aq*) which is calculated in the computirg means (76) are used in the evaluation means (74) to detect a transversely inclined underlying surface.

7. Device according to Claim 6, **characterized**

   - **in that** the yaw rate (dotψ) and/or the transverse acceleration (ay) of the vehicle is determined by the measuring means (72) during the one steering process,
   - **in that** the yaw rate (dotψ*) and/or the transverse acceleration (ay*) of the vehicle is calculated in the computing means (76), and
   - **in that** the detection of an underlying surface which is inclined transversely with respect to the direction of travel is based on a comparison which is carried out in the evaluation means (74),

   - both the yaw rate (dotψ) which is determined and the calculated yaw rate (dotψ*) and/or
   - both the transverse acceleration (aq) which is determined and the calculated transverse acceleration (aq*)

being included in the comparison.

8. Device according to Claim 7, **characterized in that** the yaw rate (dotψ*) is calculated in the computing means (76) by means of a model which includes, as input variables, the longitudinal velocity (v) of the vehicle and the steering angle (δ) of the front wheels, and/or **in that** the transverse acceleration is calculated by means of a model which includes the longitudinal velocity (v) of the vehicle as the input variable.

9. Method for detecting an underlying surface which is inclined transversely with respect to the direction of travel, which can be used in a vehicle which is equipped

   - with measuring means (72) for sensing at least one variable which describes the vehicle movement dynamics and
   - with evaluation means (74) for detecting the transverse inclination of an underlying surface,

having the following steps:

   - at least one steering process which is not actuated by the driver is initiated by steering control means (78) and
   - at least one variable which influences the vehicle movement dynamics of the vehicle is sensed by the measuring means (72) during the steering process, and
   - a transversely inclined underlying surface is detected in the evaluation means (74) during the at least one steering process, at least by evaluating the variable which influences the vehicle movement dynamics of the vehicle.

10. Method according to Claim 9, **characterized in that** the yaw rate (dotψr, dotψl, dotψ) and/or the transverse acceleration (aq, aqr, aql) are sensed in the measuring means during the at least one steering process.

## Revendications

1. Dispositif de reconnaissance d'une chaussée inclinée transversalement à la direction de déplacement d'un véhicule automobile, comprenant:

   - des moyens de mesure (72) pour saisir au moins une valeur descriptive de la dynamique de conduite et
   - des moyens d'exploitation (74) pour reconnaître l'inclinaison transversale d'une chaussée,

   **caractérisé en ce que**
   pour la reconnaissance de l'inclinaison transversale de la chaussée

   - des moyens de commande de direction (78) permettent d'initier, au niveau des roues directrices, au moins une opération de direction effectuée indépendamment du conducteur,
   - les moyens de mesure (72) saisissent au moins une valeur influençant la dynamique de conduite du véhicule automobile lors de l'opération de direction et
   - les moyens d'exploitation (74) reconnaissent une inclinaison transversale de la chaussée au moins en évaluant la valeur influençant la dynamique de conduite du véhicule automobile lors de l'au moins une opération de direction.

2. Dispositif selon la revendication 1,
   **caractérisé en ce que**
   les moyens de mesure (72) saisissent le taux de lacet (dotψr, dotψl, dotψ) et/ou l'accélération transversale (aq, aql, aqr) lors de l'au moins une opération de direction.

3. Dispositif selon la revendication 1,
   **caractérisé en ce que**
   les moyens de commande de direction (78) permettent d'initier deux opérations de direction effectuées indépendamment du conducteur, dans des directions opposées, au niveau des roues directrices.

4. Dispositif selon la revendication 3,
   **caractérisé en ce que**
   les moyens de mesure (72) déterminent le taux de lacet (dotψr, dotψl) et/ou l'accélération transversale (aqr, aql) du véhicule automobile lors des deux opérations de direction.

5. Dispositif selon la revendication 4,
   **caractérisé en ce que**
   la détection d'une chaussée inclinée transversalement à la direction de déplacement d'un véhicule automobile repose sur une comparaison effectuée par les moyens d'exploitation (74), ladite comparaison concernant les deux taux de lacet (dotψr, dotψl) et/ou accélérations transversales (aqr, aql) déterminées lors des deux opérations de direction.

6. Dispositif selon la revendication 1,
   **caractérisé en ce que**

   - les moyens de commande de direction (78) permettent d'initier, au niveau des roues directrices, une opération de direction effectuée indépendamment du conducteur,
   - les moyens de mesure (72) déterminent une valeur descriptive de la dynamique de conduite du véhicule automobile lors de l'opération de direction,
   - le véhicule automobile dispose de moyens de calcul (76) permettant de déterminer au moins une valeur descriptive de la dynamique de conduite du véhicule automobile à l'aide d'un modèle,
   - les moyens de calcul (76) calculent une valeur descriptive de la dynamique de conduite du véhicule automobile (dotψ*, aq*) et
   - pour la détection d'une chaussée inclinée, les moyens d'exploitation (74) font appel aux valeurs déterminées par les moyens de mesure (72) (dotψ, aq) ainsi qu'aux valeurs calculées (dotψ*, aq*) par les moyens de calcul (76).

7. Dispositif selon la revendication 6,
   **caractérisé en ce que**

   - les moyens de mesure (72) déterminent le taux de lacet (dotψ) et/ou l'accélération transversale (ay) du véhicule automobile lors de l'opération de direction,
   - les moyens de calcul (76) calculent le taux de lacet (dotψ*) et/ou l'accélération transversale (ay*) du véhicule automobile et
   - la détection d'une chaussée inclinée transversalement à la direction de déplacement du véhicule automobile repose sur une comparaison effectuée par les moyens d'exploitation (74), ladite comparaison faisant appel
   - à la fois au taux de lacet déterminé (dotψ) et au taux de lacet calculé (dotψ*) et/ou
   - à la fois à l'accélération transversale déterminée (aq) et à l'accélération transversale calculée (aq*).

8. Dispositif selon la revendication 7,
   **caractérisé en ce que**
   les moyens de calcul (76) calculent le taux de lacet (dotψ*) à l'aide d'un modèle faisant appel, à titre de valeurs d'entrée, à la vitesse longitudinale (v) du véhicule automobile et à l'angle de braquage (δ) des roues avant, et/ou calculent la vitesse transversale à l'aide d'un modèle faisant appel, à titre de valeur d'entrée, à la vitesse longitudinale (v) du véhicule automobile.

9. Procédé de reconnaissance d'une chaussée inclinée transversalement à la direction de déplacement d'un véhicule automobile, pouvant être mis en oeuvre dans un véhicule automobile muni

   - de moyens de mesure (72) pour saisir au moins une valeur descriptive de la dynamique de conduite et
   - de moyens d'exploitation (74) pour reconnaître l'inclinaison transversale d'une chaussée,

   comprenant les étapes suivantes consistant à :

   - initier, par des moyens de commande de direction (78), au moins une opération de direction effectuée indépendamment du conducteur,
   - saisir, par des moyens de mesure (72), au moins une valeur influençant la dynamique de conduite du véhicule automobile lors de l'opération de direction,
   - reconnaître, par les moyens d'exploitation (74), une chaussée inclinée au moins en exploitant la valeur influençant la dynamique de conduite du véhicule automobile lors de l'au moins une opération de direction.

10. Procédé selon la revendication 9,
    **caractérisé en ce que**
    les moyens de mesure saisissent le taux de lacet (dotψr, dotψl, dotψ) et/ou l'accélération transversale (aq, aqr, aql) lors de l'au moins une opération de direction.

*Fig. 1*

*Fig. 3*

Fig. 2a

Fig. 2b

*Fig. 4a*

*Fig. 4b*

*Fig. 5*

Fig. 6

Fig. 7

Fig. 8

Fig. 9